# EUROPEAN PATENT APPLICATION

(11) **EP 4 602 907 A1**
(43) Date of publication of application: **20.08.2025**
(21) Application number: 25154718.8
(22) Date of filing: 29.01.2025
(51) Int. Cl.: A01D 41/127, G01S 19/39, H01Q 1/32

(54) **WORK VEHICLE**

(30) Priority: 07.02.2024 JP 2024017400; 28.11.2024 JP 2024207419
(71) Applicant: Yanmar Holdings Co., Ltd., Osaka-shi, Osaka (JP)
(72) Inventor: KUSUNOSE, Yoshio, Okayama-shi (JP); KOBAYASHI, Mitsuru, Okayama-shi (JP); MORIKAWA, Yutaka, Okayama-shi (JP); LEE, Seungkyu, Okayama-shi (JP)
(74) Representative: Sekiguchi, Kazuya

(57) **Abstract**

[Problem]The present invention is to provide a work vehicle capable of utilizing a space surrounding a cabin in a configuration in which the cabin covering a driving section is installed and capable of installing a position measuring device in a position close to a swivel center of the vehicle so that positioning accuracy is improved.

[Solution]A combine harvester serving as a work vehicle includes a cabin 16 covering a driving section, and a receiving device 81 for measuring a position in a work site based on positional information. The receiving device 81 is installed in a position on a rear side relative to a front-rear center position C0 in a front-rear direction of a machine body with respect to the cabin 16.

## Description

### TECHNICAL FIELD

The present invention relates to a work vehicle including a cabin covering a driving section and also including a position measuring device, such as a device that receives positional information, for example.

### BACKGROUND ART

In general, work vehicles, such as combine harvesters and tractors, having a position measuring device, such as a device that receives positional information from a satellite, for enabling autonomous traveling have been used (refer to Patent Document 1, for example).

Patent Document 1 discloses a configuration of a combine harvester including a receiving device, such as a global navigation satellite system (GNSS) receiver, that receives electric waves relating to positional information supplied from a positioning satellite, a calculation device that calculates positional data based on the electric waves received by the receiving device, and a wireless communication device that transmits the positional data calculated by the calculation device in a wireless communication manner. These devices are accommodated in a case and provided as a positioning unit.

Patent Document 1 discloses a configuration in which the positioning unit is installed in a position lower than an upper end of a discharge auger in a retracted state on a side portion of a driver's seat on a center side of a machine body, a configuration in which the positioning unit is installed in a roof of a cabin covering the driving section, and the like.

### PRIOR ART DOCUMENT

### PATENT DOCUMENT

Patent Document 1: Japanese Patent No. 6688545

### SUMMARY OF INVENTION

### TECHNICAL PROBLEM

As for arrangement of the position measuring device that receives positional information, the position measuring device is preferably installed in a position as close as possible to a swivel center of the work vehicle in terms of improvement of positioning accuracy by reduction of a positioning error.

The present invention is to provide a work vehicle capable of utilizing a space surrounding a cabin in a configuration in which the cabin covering a driving section is installed and capable of installing the position measuring device in a position close to a swivel center of a vehicle so that positioning accuracy is improved.

### SOLUTION TO PROBLEM

A work vehicle according to the present invention includes a cabin covering a driving section, and a position measuring device for measuring a position in a work site based on positional information. The position measuring device is installed in a position on a rear side of a center position in a front-rear direction of a machine body with respect to the cabin.

In the work vehicle according to another aspect of the present invention, the position measuring device is disposed along an upper edge portion of a roof portion of the cabin in a side view of the machine body.

In the work vehicle according to still another aspect of the present invention, the position measuring device includes a device main body, a case accommodating the device main body, and a support bracket which supports the case with respect to a side wall portion of the cabin.

In the work vehicle according to a further aspect of the present invention, the support bracket extends obliquely upward from the side wall portion in a front view of the machine body.

The work vehicle according to a still further aspect of the present invention further includes an antenna which receives information from a base station located outside the work site, and the antenna is attached to the support bracket.

In the work vehicle according to a still further aspect of the present invention, the position measuring device allows connection of a cable including at least one of a power supply line and a signal transmission/reception line, and the cable is wired along the support bracket.

The work vehicle according to a still further aspect of the present invention further includes a grain discharge device that is disposed in a turnable manner and in a retraction available manner in a predetermined turning position and that discharges grains to an outside the machine. The position measuring device is disposed in a space formed between the cabin and the grain discharge device in the retracted state.

In the work vehicle according to a still further aspect of the present invention, the position measuring device is disposed on a left side wall portion of the cabin.

In the work vehicle according to a still further aspect of the present invention, the position measuring device does not overlap with the roof portion of the cabin in a plan view.

### ADVANTAGEOUS EFFECTS OF INVENTION

According to the present invention, in the configuration including a cabin covering a driving section, a space surrounding the cabin may be utilized and a position measuring device may be disposed in a position close to a swivel center of the vehicle so that positioning accuracy is improved.

### BRIEF DESCRIPTION OF DRAWINGS

FIG. 1 is a left side view of a combine harvester according to an embodiment of the present invention.
FIG. 2 is a right side view of the combine harvester according to the embodiment of the present invention.
FIG. 3 is a plan view of the combine harvester according to the embodiment of the present invention.
FIG. 4 is a left side view of a cabin according to the embodiment of the present invention.
FIG. 5 is a front view of the cabin according to the embodiment of the present invention.
FIG. 6 is a plan view of the cabin according to the embodiment of the present invention.
FIG. 7 is a block diagram illustrating a configuration of a self-steering system of the combine harvester according to the embodiment of the present invention.
FIG. 8 is a left side view of a receiving device and a support configuration thereof according to the embodiment of the present invention.
FIG. 9 is a front view of the receiving device and the support configuration thereof according to the embodiment of the present invention.
FIG. 10 is a front perspective view of the receiving device and the support configuration thereof according to the embodiment of the present invention.
FIG. 11 is a back side view of the receiving device and the support configuration thereof according to the embodiment of the present invention.
FIG. 12 is a cross-sectional plan view of the receiving device and the support configuration thereof according to the embodiment of the present invention.

### DESCRIPTION OF EMBODIMENTS

According to the present invention, in a configuration including a cabin covering a driving section and a position measuring device for measuring a position of a vehicle, an arrangement position of the position measuring device with respect to the cabin is devised so that measurement accuracy is improved. In the following, an embodiment of the present invention is described with reference to the drawings.

In the embodiment of the present invention described below, a combine harvester is taken as an example of a work vehicle according to the present invention. However, the work vehicle according to the present invention is not limited thereto as long as the work vehicle includes a cabin covering a driving section. Examples of the work vehicle to which the present invention is applied include a tractor and a wheel loader for civil engineering work, in addition to various combine harvesters, such as a head-feeding combine harvester and an ordinary combine harvester.

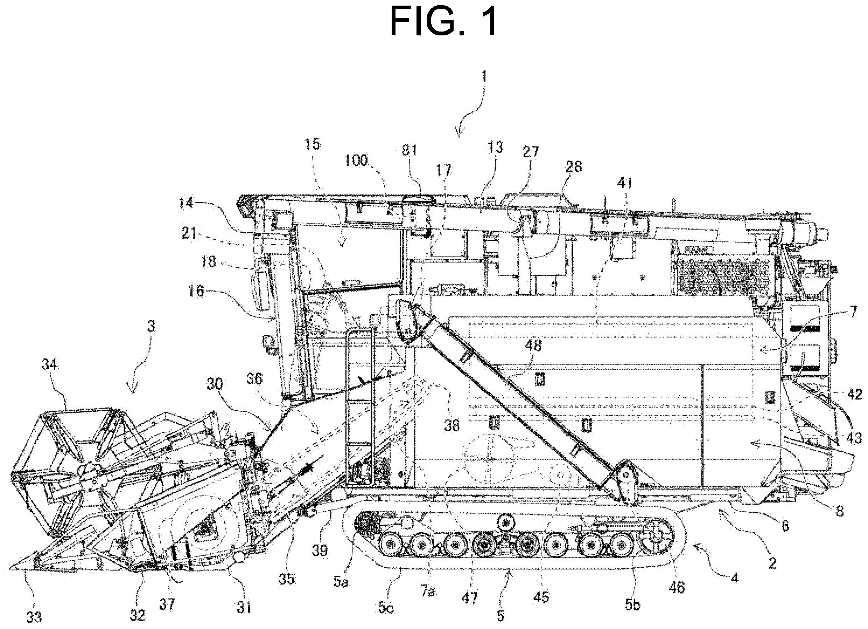

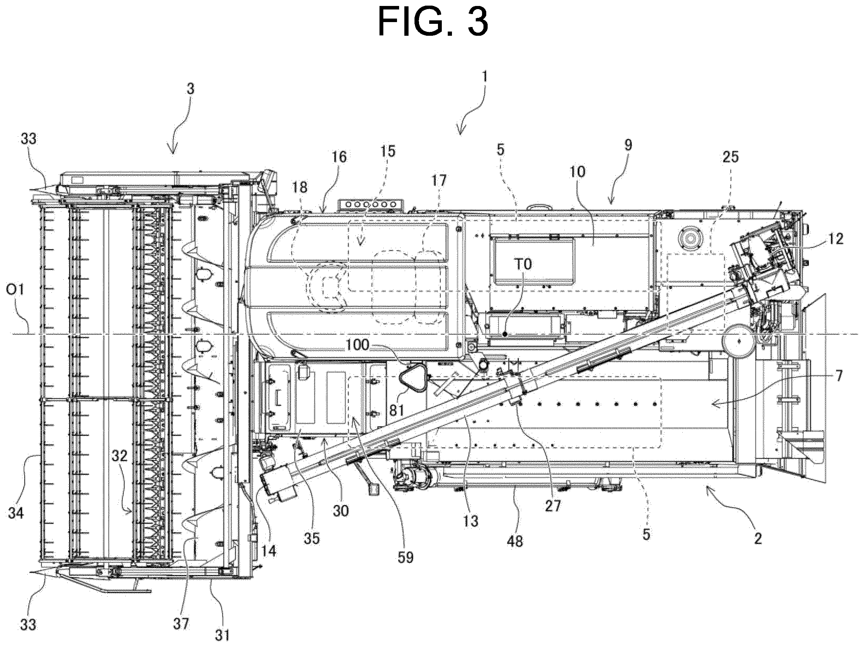

An entire configuration of a combine harvester 1 as the work vehicle according to this embodiment will be described with reference to FIGS. 1 to 3. Note that, in the following description, a left side (lower side in FIG. 3) and a right side (upper side in FIG. 3) toward a front of the combine harvester 1 are determined as a left side and a right side of the combine harvester 1, respectively.

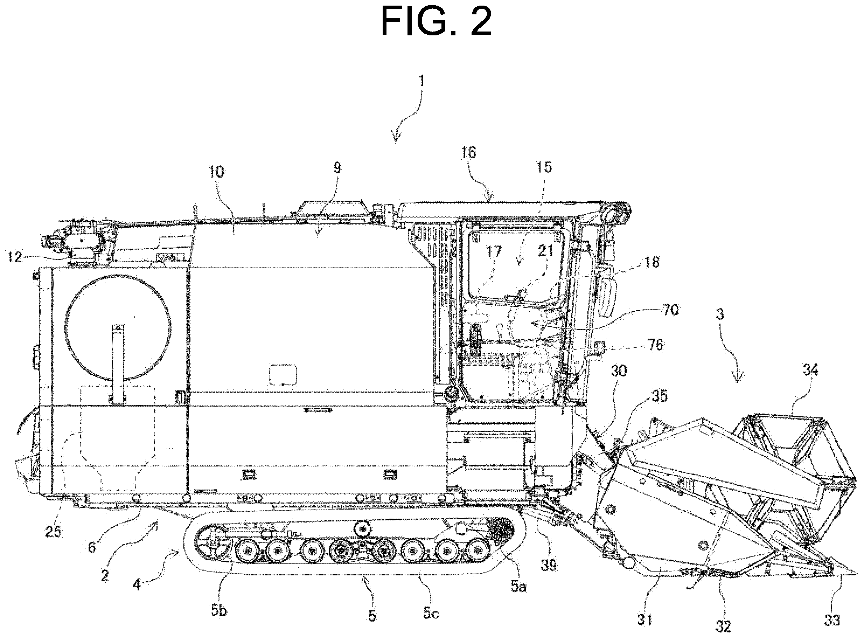

As illustrated in FIGS. 1 and 2, the combine harvester 1 according to this embodiment is an ordinary combine harvester as a harvester capable of raking reaped field crops into a machine body, threshing, sorting, storing grains, and conveying out the grains to the outside of the machine as appropriate. The combine harvester 1 includes a traveling machine body 2 capable of autonomously traveling and a reaping section 3 disposed at a front end portion of the traveling machine body 2. The reaping section 3 is a reaping device configured to reap grain culm, such as rice and wheat, which has not been reaped while taking in the reaped grain culm and is attached to the traveling machine body 2 in a lifting available manner.

The traveling machine body 2 includes a traveling section 4 configured as a crawler-type traveling device having a pair of right and left crawler portions 5. A machine body frame 6 is bridged between the right and left crawler portions 5. Each of the crawler portions 5 has a plurality of rotators including a driving sprocket 5a disposed in a front end portion of the crawler portion 5 and a tension roller 5b disposed in a rear end portion of the crawler portion 5, and a cover belt 5c wound over the rotators. The driving sprocket 5a is driven to rotate after receiving transmission of power of an engine 25 serving as a driving source included in the combine harvester 1.

On a left side on the machine body frame 6, a threshing section 7 that threshes grain culm combined and supplied by the reaping section 3 and a sorting section 8 that sorts grains threshed by the threshing section 7 are disposed. The threshing section 7 and the sorting section 8 are arranged in such a manner that the threshing section 7 is in an upper stage and the sorting section 8 is in a lower stage.

On the machine body frame 6, a grain storage 9 having a grain tank 10 that stores grains (clean grain) sorted by the sorting section 8 is disposed on a right side of the threshing section 7 and the sorting section 8. In the grain tank 10, a lower discharge conveyor is disposed to convey the stored grains toward a discharge port of the grain tank 10. A vertical conveyor 12 is erected in an up-down direction in the vicinity of a right rear end portion of the machine body frame 6 so as to communicate with the discharge port of the grain tank 10. A grain discharge conveyor 13 serving as a discharge auger incorporating a screw conveyor is connected to an upper end portion of the vertical conveyor 12. The grain discharge conveyor 13 is an example of a grain discharge device that discharges grains to the outside of the machine.

The grain discharge conveyor 13 is disposed in a horizontally turnable manner with respective to the machine body frame 6 through the vertical conveyor 12. Furthermore, the grain discharge conveyor 13 is disposed so as to rotate around a horizontal axis and move up and down with a base portion thereof as a center. The grains included in the grain tank 10 are conveyed by these conveyors, ejected from a chaff slot 14 formed on a tip end portion of the grain discharge conveyor 13, and thrown into a loading platform of a truck, a container, or the like.

In a retracted state of the grain discharge conveyor 13, the grain discharge conveyor 13 extends from the vertical conveyor 12 in a substantially horizontal direction toward a left front side. In the retracted state, the grain discharge conveyor 13 extends diagonally with respect to the machine body such that the distal end thereof is positioned on the left side of the front portion of the feeder 30 of the reaping section 3 in a plan view (refer to FIG. 3). The grain discharge conveyor 13 is mounted and supported on an auger rest 27 as an auger receiving portion to be in a retracted state.

The auger rest 27 is disposed in a state of being supported by a support pillar portion 28, which is constituted by a predetermined support member, in a left rear oblique position with respect to the cabin 16. The support pillar portion 28 is erected so as to extend upward from an upper surface portion of the threshing section 7. The auger rest 27 has a concave shape whose upper side is an open side so as to store and support the cylindrical grain discharge conveyor 13 in a positioned state, and supports a predetermined portion in an intermediate portion in the extending direction of the grain discharge conveyor 13 from a lower side.

As described above, the combine harvester 1 includes the grain tank 10 disposed on the traveling machine body 2 and the grain discharge conveyor 13 which is disposed in the traveling machine body 2 in a turnable manner, which is disposed in a retraction available manner at a predetermined turning position, and which ejects the grains included in the grain tank 10 to the outside.

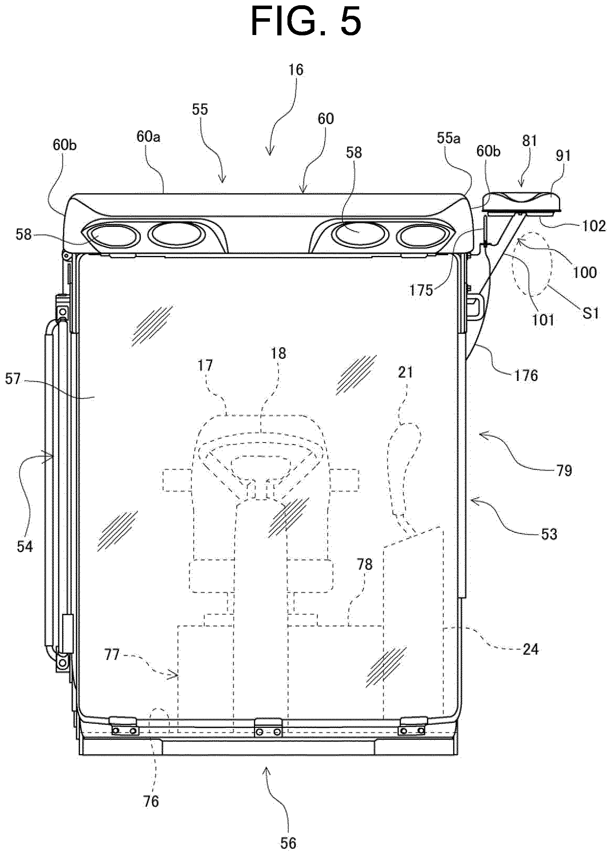

Furthermore, on the machine body frame 6, a driving section 15 in which an operator is on board is disposed in a position in front of the grain storage 9, that is, a position of a right front portion on the machine body frame 6. The driving section 15 is for steering the vehicle as the combine harvester 1, and is covered with a cabin 16. The driving section 15 has various operation tools including a driver's seat 17, a steering handle 18 disposed in front of the driver's seat 17, and a main shift lever 21. The operation tools including the main shift lever 21 are disposed on a lever column 24 disposed on a left side of the driver's seat 17 (refer to FIG. 5).

An engine 25 as a driving source is disposed in the rear of the grain storage 9 on the traveling machine body 2. The engine 25 is a diesel engine and has a diesel particulate filter (DPF) serving as a discharge gas purifying device mounted thereon.

The reaping section 3 includes a feeder 30, a grain header (platform) 31, a cutting blade device 32, a pair of right and left grass dividers 33, 33, and a raking reel 34.

The feeder 30 is a conveying device that conveys grain culm reaped by the reaping section 3 and supplies the grain culm to the threshing section 7. The feeder 30 includes a feeder house 35 as a housing and a grain culm conveyor 36 disposed inside the feeder house 35. The feeder 30 is disposed in a state in which a rear end opening portion of the feeder house 35 configured in a substantially rectangular tube shape with a longitudinal direction as a front-rear direction in a plan view is in communication with the threshing port 7a on the front side of threshing section 7.

The feeder 30 is positioned on a left side of the cabin 16 and disposed on a machine body center side in the right-left direction (right-left inner side) with respect to the cabin 16. As illustrated in FIG. 3, the cabin 16 covering the driver's seat 17 is installed in a position on a relatively right side with respect to a machine body center O1 which is a tread center of the left and right crawler portions 5. The feeder 30 is disposed on a side closer to the machine body center O1 in the right-left direction with respect to the cabin 16, that is, the left side of the cabin 16.

The grain header 31 has a horizontally long bucket shape, and communicates with a front of the feeder 30 so as to communicate with a front end opening portion of the feeder house 35. A raking auger (platform auger) 37 is disposed inside the grain header 31. The raking auger 37 is suspended on a rotation shaft so as to rotate with the rotation shaft extending in the right-left direction.

The cutting blade device 32 is disposed in a lower front edge portion of the grain header 31 and formed as electric clippers. The pair of right and left grass dividers 33, 33 are disposed so as to protrude forward from right and left side portions on a front side of the grain header 31. The raking reel 34 has a tine bar and is disposed in an upper font position of the raking auger 37 in a state in which the raking reel 34 is supported with a rotation shaft extending in the right-left direction. The raking reel 34 continuously acts on hull attaching portions of the grain culm while rotating, and rakes the hull attaching portions of the grain culm to the raking auger 37. Power from the engine 25 transmitted through various transmission mechanisms is used for operations of the sections included in the reaping section 3.

The conveyor 36 included in the feeder house 35 has, as a driving shaft that supports a feeding end side thereof, a reaping input shaft (feeder house conveyor shaft) 38 disposed in front of the threshing section 7 with the right-left direction as a shaft direction. A rear end portion of the feeder 30 is supported by the reaping input shaft 38 so as to rotate with a rotation shaft extending in the right-left direction. A lifting cylinder 39 is interposed between a lower surface portion of the feeder house 35 and the machine body frame 6.

The threshing section 7 and the sorting section 8 will now be described. The threshing section 7 includes a threshing cylinder 41 disposed in a threshing chamber having the threshing port 7a opened forward, and a receiving net 42 disposed below the threshing cylinder 41. The threshing cylinder 41 is supported in a rotatable manner by a threshing cylinder shaft extending in the front-rear direction. On an upper side of the threshing cylinder 41, a plurality of dust sending valves (not illustrated) for adjusting a conveying speed (retention time) of threshed material in the threshing chamber are disposed in an angle adjustable manner. The receiving net 42 is disposed along an outer peripheral surface of a lower portion of the threshing cylinder 41 to leak grains downward.

The sorting section 8 includes a swing sorting board 43 serving as a swing section disposed below the receiving net 42, a first conveyor 45, a second conveyor 46, and a winnower 47.

The swing sorting board 43 has components for gravity sorting, such as a feed pan, a chaff sieve that adjusts a grain leakage amount and that is disposed on a rear side of the feed pan, and a grain sieve disposed below the chaff sieve. The first conveyor 45 is disposed in a first gutter extending in a machine body width direction so as to collect first grains. The second conveyor 46 is disposed in a second gutter extending in the machine body width direction so as to collect second grains in a rear position of the first conveyor 45. The winnower 47 sends sorting air passing from a lower front portion to an upper rear portion to the swing sorting board 43.

Furthermore, a returning conveyor 48 is disposed on a left side in the machine body with respect to a portion where the threshing section 7 and the sorting section 8 are disposed. The returning conveyor 48 is connected to the second conveyor 46 with a lower end portion thereof positioned in the vicinity of the second conveyor 46, and extends in a forwardly rising inclined manner with an upper end portion thereof positioned in the vicinity of a front end portion of the threshing cylinder 41. Moreover, an upper conveyor (not illustrated) extending in the right-left direction in front of the threshing cylinder 41 is disposed at an upper end portion of the returning conveyor 48.

The combine harvester 1 having the configuration described above lifts the reaping section 3 by a lifting operation of the feeder 30 with the reaping input shaft 38 as a supporting shaft to a desired height (a reaping height of grain culm which is harvested crops) and is brought into an operation state from a non-operation state so as to travel by the traveling machine body 2 in the operation state in a field. As a result, the combine harvester 1 separates the harvested crops into objects to be reaped and objects not to be reaped by the left and right grass dividers 33, and while raking in the hull attaching portion on an ear tip side of the grain culm to be reaped by the raking reel 34, the hull attaching portions of the grain culm are reaped by the cutting blade device 32.

The hull attaching portions of the grain culm reaped at the desired reaping positions are raked by the raking auger 37, which is being rotated, into the grain header 31 and collected in the vicinity of an inlet of the feeder house 35 located in a center portion in the right-left direction of the grain header 31, through into the threshing port 7a through the feeder house 35 by the conveyor 36 included in the feeder house 35, and supplied to the threshing section 7.

The grain culm supplied to the threshing section 7 is threshed in a position between the threshing cylinder 41 and the receiving net 42 while being conveyed rearward by the rotating threshing cylinder 41. Threshed materials, such as grains smaller than mesh of the receiving net 42, leak down from the receiving net 42. Waste straws and the like which do not fall from the receiving net 42 are discharged to the field from a dust discharge port provided at a rear portion of the sorting section 8 by a conveying action of the threshing cylinder 41. On the other hand, grains (threshed grains) threshed in the threshing section 7 and falling from the receiving net 42 are separated into grains (first grains), such as refined grains, a mixture of grains and straws (second grains), such as grains with rachis-branches, and waste straws by a gravity sorting action of the swing sorting board 43 and a wind sorting action of the winnower 47.

The grains (first grains) falling from the swing sorting board 43 by the sorting performed by the sorting section 8 are conveyed to the grain tank 10 by the first conveyor 45 and a grain lifting conveyor (not illustrated) connected to the first conveyor 45. The second grains are returned to a threshing starting end side of the threshing cylinder 41 by the second conveyor 46, the returning conveyor 48 connected to the second conveyor 46, and an upper conveyor and subjected to the threshing process again. The waste straws and the like are discharged to the field from the dust discharge port provided at the rear portion of the sorting section 8.

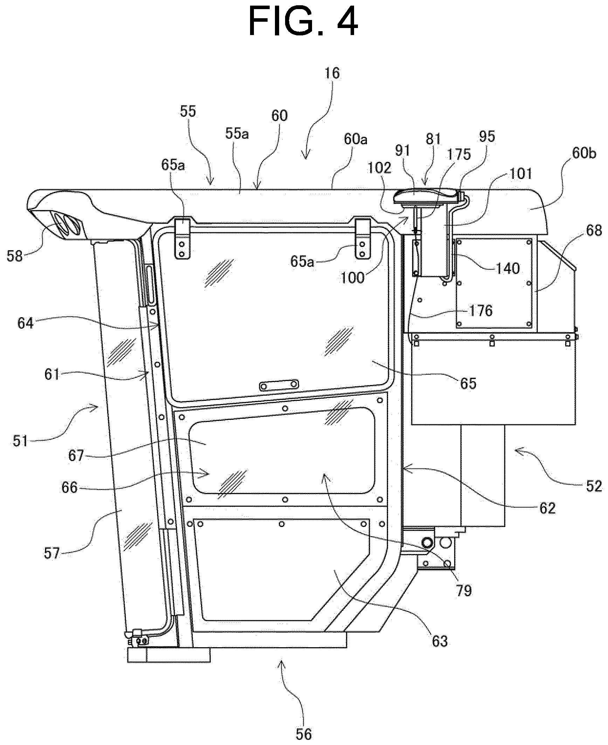

A configuration of the cabin 16 will be described with reference to FIGS. 4 to 6. The cabin 16 has a front surface portion 51, a rear surface portion 52, a left side wall portion 53, a right side wall portion 54, a roof portion 55 that forms a ceiling, and a floor portion 56, and these portions form a substantially box shape as a whole.

The front surface portion 51 of the cabin 16 is formed, as an entirely transparent window portion, from a rectangular transparent plate 57 made of glass, acrylic resin, polycarbonate resin, or the like. The front surface portion 51 is a slightly forward inclined surface portion as a whole, and has a flat surface portion at an intermediate portion in a right-left direction and curved surface portions at both right and left side portions.

In the left side wall portion 53 of the cabin 16, a left front pillar portion 61 is disposed on a front edge portion and a left rear pillar portion 62 is disposed on a rear edge portion. The left front pillar portion 61 and the left rear pillar portion 62 are disposed on the left side wall portion 53 over the approximately entire up-down direction. The left front pillar portion 61 extends along a forward inclination of the front surface portion 51 in a side view. The left rear pillar portion 62 has an upper portion extending along the up-down direction and a lower portion inclined rearward.

In the left side wall portion 53, a lower portion between the front and rear pillar portions 61 and 62 serves as a lower side surface portion 63 that is a metal plate portion composed of a steel plate or the like. An upper portion between the pillar portions 61 and 62 serves as an upper left window portion 64. The upper left window portion 64 is configured by mounting a transparent plate 65, such as rectangular glass, to a frame-shaped portion including upper portions of the front and rear pillar portions 61 and 62. The transparent plate 65 is disposed so as to be openable and closable with front and rear hinge portions 65a disposed in two portions on an upper side of the upper left window portion 64. Furthermore, between the pillar portions 61 and 62, a portion between the lower side surface portion 63 and the upper left window portion 64 is configured as a lower left window portion 66 formed by a transparent plate 67, such as glass.

In the left side wall portion 53, an upper rear side plate 68 is disposed on a rear side of an upper portion of the left rear pillar portion 62. The upper rear side plate 68 forms a corner portion on an upper rear side of the left side wall portion 53. The upper rear side plate 68 has a front side edge portion extending along the left rear pillar portion 62 extending in the up-down direction.

The right side wall portion 54 of the cabin 16 includes a door 70, which is an open/close door for getting in and out (refer to FIG. 2). The door 70 is supported by a hinge portion disposed in a front portion of the right side wall portion 54 in a turnable manner by the frame portion of the cabin 16 in a manner that the door 70 opens outward from the rear side.

The roof portion 55 of the cabin 16 has a substantially rectangular outer shape with a front-rear direction as a longitudinal direction in a plan view. The roof portion 55 has an edge portion on a front side projecting forward in an eave shape with respect to an upper end portion of the front surface portion 51. A plurality of lighting portions 58 are disposed side by side on a front end surface portion of the roof portion 55.

The roof portion 55 is formed to have a flattened outer shape and be hollow. The roof portion 55 has a lower side panel (not illustrated) that forms a base portion of the roof portion 55, and a roof panel 60 which is disposed above the lower side panel and which is a cover member, and these panels form a hollow portion. The roof panel 60 has a flat upper surface portion 60a and left and right side surface portions 60b that are formed so as to bend downwardly on both the left and right sides of the upper surface portion 60a. The upper surface portion 60a is a horizontal surface portion formed along a surface which is vertical in the up-down direction.

The left side surface portion 60b of the roof panel 60 covers an upper edge portion of the left side wall portion 53 from left, and the right side surface portion 60b of the roof panel 60 covers an upper edge portion of the right side wall portion 54 from right. An interior of the roof portion 55 has an indoor unit of an air-conditioning device and the like included in the combine harvester 1.

The floor portion 56 of the cabin 16 forms a floor surface portion 76 of a horizontal shape in a lower front portion of the driver's seat 17. On a rear side of the floor surface portion 76, a driver's seat support portion 77 forming a horizontal seat support surface portion 78 is disposed at a position higher than the floor surface portion 76. The driver's seat 17 is disposed on the driver's seat support portion 77.

In the cabin 16 having the above-described configuration, a left side surface portion of the cabin 16 is formed by the left side wall portion 53 and a left portion of the roof portion 55. In addition, the right side surface portion of the cabin 16 is formed by the right side wall portion 54 and a right portion of the roof portion 55. In the following, the left side surface portion including the left side wall portion 53 and the left portion of the roof portion 55 in the cabin 16 is determined as a cabin left side surface portion 79.

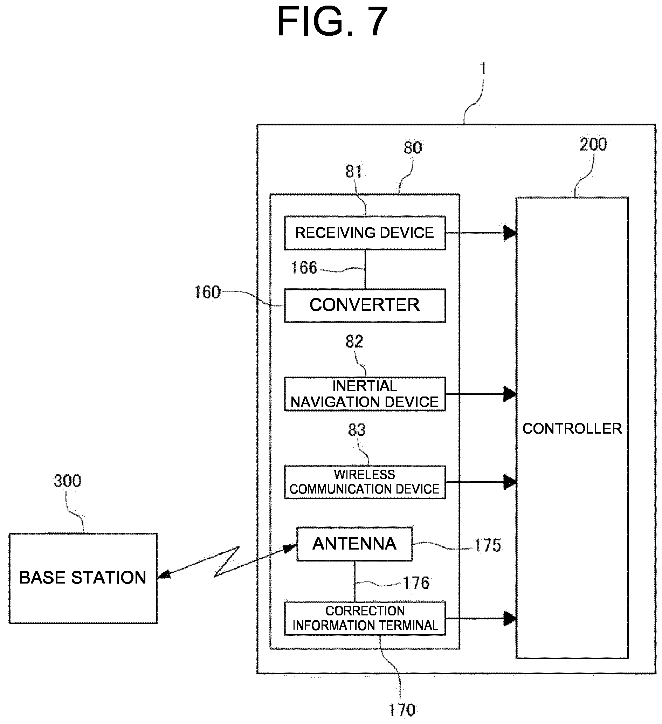

As illustrated in FIG. 7, the combine harvester 1 according to this embodiment includes a positioning system 80 for receiving positional information from a satellite to measure a position of the combine harvester 1. The positioning system 80 receives electric waves from the positioning satellite to measure a position of the combine harvester 1.

The positioning system 80 includes a receiving device 81 as a receiving section, an inertial navigation device 82 as an arithmetic section, and a wireless communication device 83 as a communication section. The positioning system 80 constitutes an automatic steering system of the combine harvester 1 with a controller 200 included in the combine harvester 1.

The receiving device 81 receives radio waves from a positioning satellite, converts the received radio waves into signals, and transmits the signals to the inertial navigation device 82. The receiving device 81 is, for example, a GNSS receiver (GNSS antenna) that receives radio waves from a group of GNSS satellites, a Global Positioning System (GPS) receiver (GPS antenna) that receives radio waves from GPS satellites, or the like.

The inertial navigation device 82 is an inertial measuring unit (IMU) that measures triaxial gyros and acceleration in three directions to calculate posture orientation data. The inertial navigation device 82 calculates positional data on the basis of signals transmitted from the receiving device 81. The inertial navigation device 82 functions as an arithmetic device that calculates positional data based on positional information supplied from the receiving device 81. For example, when the inertial navigation device 82 includes a GNSS receiver, reliability of the posture orientation data calculated by the inertial navigation device 82 is improved.

The positioning system 80 including the inertial navigation device 82 makes it possible to use inertial navigation to calculate and determine a speed and a distance of movement based on the acceleration in three directions detected by the inertial navigation device 82, even in situations where radio waves from positioning satellites cannot be received due to bad weather, radio wave interference, and the like.

The wireless communication device 83 transmits positional data and posture orientation data calculated by the inertial navigation device 82 to the outside via wireless communication. The wireless communication device 83 is a data communication device using, for example, wireless local area network (LAN) or mobile communication. The data transmitted from the wireless communication device 83 is received by, for example, a mobile terminal owned by an operator or an Electronic Control Unit (ECU) of the combine harvester 1, and is used to check a position of the combine harvester 1 in the field, check a posture of the combine harvester 1 (e.g., forward/rearward/right/left inclination), and so on.

The positioning data (positional data and posture orientation data) acquired by the positioning system 80 is used to control the autonomous combine harvester 1, which works while traveling autonomously along a predetermined route. The positional data are used, for example, to determine whether the combine harvester 1 is traveling along a predetermined route. Furthermore, the posture orientation data is used to check a driving condition of the combine harvester 1 and a condition of the field, for example, by recognizing an inclination of the combine harvester 1. Moreover, when the operator receives transmitted data from the wireless communication device 83 by the mobile terminal or the like, a real-time instruction can be transmitted to the combine harvester 1.

Note that the configuration of the positioning system 80 is not limited to this embodiment. As a configuration of the positioning system 80, for example, the receiving device 81 may be configured to have the function of an arithmetic section that calculates positional data using positional information received by the receiving device 81, so that the inertial navigation device 82 may be omitted.

As described above, the combine harvester 1 according to this embodiment includes the cabin 16 covering the driving section 15 and the receiving device 81 as a device that receives positional information in the field which is a work site. The receiving device 81 is an example of a position measuring device for measuring a position in the work site based on positional information.

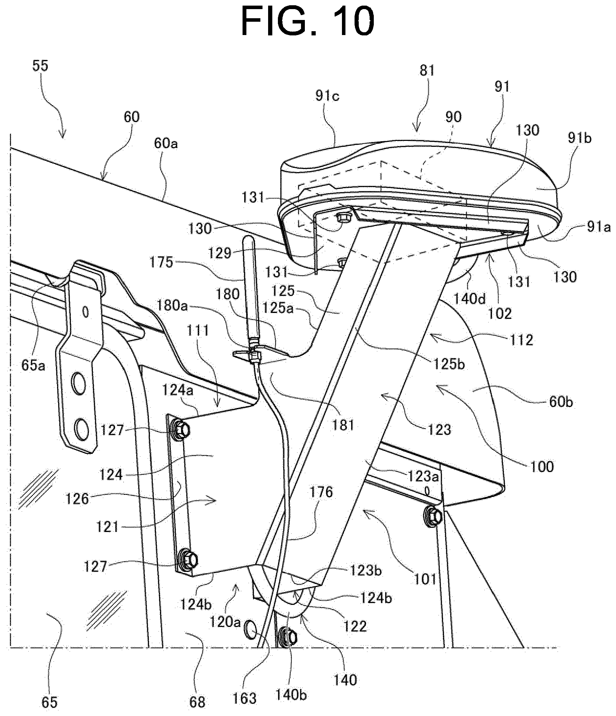

An arrangement configuration and a support configuration of the receiving device 81 will be described below with reference to FIGS. 4 to 12.

The receiving device 81 includes a device main body 90 and a case 91 accommodating the device main body 90. The device main body 90 is a main body device portion that exhibits a function of the receiving device 81 as a GNSS receiver, a GPS receiver, or the like.

The case 91 is a hollow case forming an accommodation space for the device main body 90. The case 91 is a member that causes the entire device main body 90 to be accommodated in the accommodation space, covers the entire device main body 90, and forms an outer shape of the receiving device 81. The case 91 is a member made of resin, for example.

The case 91 has a flat outer shape of a substantially equilateral triangle with rounded corners in a plan view. The case 91 includes a bottom surface portion 91a which is a horizontal plate-shaped portion, a side surface portion 91b along the outer shape of the case 91 in a plan view, and an upper surface portion 91c which faces the bottom surface portion 91a, as portions which form an accommodation space. The bottom surface portion 91a and the upper surface portion 91c form the outer shape of the case 91 in a plan view. The upper surface portion 91c has a shape in which most of the upper surface portion 91c including its planar center is a horizontal surface portion, and three portions in the vicinity of three apexes in a planar outer shape of a substantially rounded equilateral triangle are curved surface portions gently inclined downward from the center side to the outer side.

The device main body is disposed in the case 91 in a state of being fixed by fixtures, such as bolts, to the bottom surface portion 91a through an attaching plate or the like. The case 91 is constituted by, for example, a base plate forming the bottom surface portion 91a and a cover body, disposed on the base plate so as to form the side surface portion 91b and the upper surface portion 91c and cover the device main body 90 disposed on the base plate.

The receiving device 81 is disposed in a direction in which one of the apexes face forward and a side portion positioned on the rear side extends in the right-left direction of the machine body, with respect to the planar outer shape of the case 91. That is, the receiving device 81 is disposed to have a symmetry shape in the right-left direction.

An arrangement configuration of the receiving device 81 will be described. The receiving device 81 is disposed on the left side wall portion 53 of the cabin 16. The receiving device 81 is disposed in a state of being supported with respect to the cabin 16 via a predetermined support member so that the receiving device 81 is positioned in the vicinity of a portion on the left side of an upper portion of the cabin left side surface portion 79 including the left side wall portion.

The receiving device 81 is disposed in a position on the left side of the cabin 16 such that the receiving device 81 does not overlap with the roof portion 55 of the cabin 16 in a plan view of the machine body. That is, a right end of the receiving device 81 positioned on the left side of the cabin 16 is positioned on the left side of a left end of the roof portion 55, and the entire receiving device 81 is positioned on the left side of the roof portion 55.

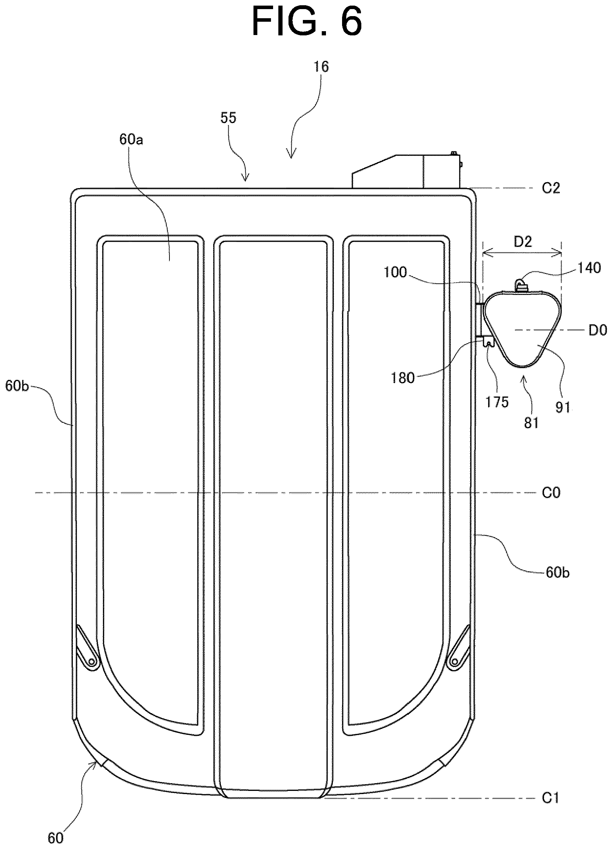

The receiving device 81 is disposed in a position on a rear side of a center position in the front-rear direction of the machine body with respect to the cabin 16. As illustrated in FIG. 6, in the front-rear direction, the receiving device 81 is installed so that the entire receiving device 81 is located on the rear side of a front-rear center position C0 of the cabin 16 in the front-rear direction. That is, in the front-rear direction, the receiving device 81 is installed so that a front top portion of the case 91 in an outer shape in a plan view is positioned on the rear side of the front-rear center position C0.

The front-rear center position C0 coincides with or substantially coincides with a center position between a front end position C1 and a rear end position C2 of the roof portion 55 in a configuration in which a size of the roof portion 55 in the front-rear direction is substantially the same as a size of the entire cabin 16 in the front-rear direction. In this embodiment, the receiving device 81 has an approximate size of 1/7 to 1/8 of a size of the roof portion 55 in the front-rear direction, and is disposed in a substantially center portion of a rear portion of the roof portion 55 (a portion on the rear side of the front-rear center position C0). Thus, the receiving device 81 is disposed on a left rear side of the roof portion 55 with respect to the cabin 16.

Although the receiving device 81 is disposed so as to be entirely positioned on the rear side of the front-rear center position C0 in this embodiment, the present disclosure is not limited to this arrangement. As for the arrangement of the receiving device 81 in the cabin 16 in the front-rear direction, a portion of the receiving device 81 may be positioned on the front side of the front-rear center position C0 as long as a center position D0 of the receiving device 81 in the front-rear direction is positioned on the rear side of the front-rear center position C0 of the cabin 16. Here, the center position D0 of the receiving device 81 is a center position of the case 91 in the front-rear direction.

Furthermore, as a planar arrangement of the receiving device 81, the receiving device 81 is disposed in a space 59 formed between the cabin 16 and the grain discharge conveyor 13 in the retracted state. As illustrated in FIG. 3, a base end portion of the grain discharge conveyor 13, which serves as a rotation fulcrum portion, is positioned on the rear side of the cabin 16, and a front portion of the grain discharge conveyor 13 extends to a left front side from the auger rest 27 positioned in the vicinity of a left rear side of the cabin 16 in the retracted state in which the grain discharge conveyor 13 is supported by the auger rest 27.

Therefore, in a plan view, the space 59 which is a region portion of a substantially triangle shape (substantially right triangle shape) is formed on the left side of the cabin 16, that is, in a portion between the side surface portion 60b of the roof panel 60 constituting the roof portion 55 and a front portion of the grain discharge conveyor 13. The receiving device 81 is disposed in the space 59. According to this embodiment, the receiving device 81 is disposed in a rear portion of the space 59.

The receiving device 81 is disposed along an upper edge portion 55a of the roof portion 55 of the cabin 16 when viewed from a left side of the machine body. That is, the receiving device 81 having a flat outer shape is installed in the case 91 in a posture in which the bottom surface portion 91a which is a planar portion is horizontal, and is provided such that a longitudinal direction in a side view is along the horizontal upper edge portion 55a of the roof portion 55. Here, the upper edge portion 55a of the roof portion 55 in a side view serves as an upper edge portion of the upper surface portion 60a or the side surface portion 60b of the roof panel 60.

The receiving device 81 is disposed at approximately the same height as the roof portion 55 in the up-down direction. Specifically, the receiving device 81 is disposed so that a size thereof in the up-down direction is approximately 1/3 to 1/4 of a size of the side surface portion 60b of the roof panel 60 in the up-down direction, and the substantially entire portion thereof in the up-down direction is positioned in a height range of the side surface portion 60b of the roof panel 60.

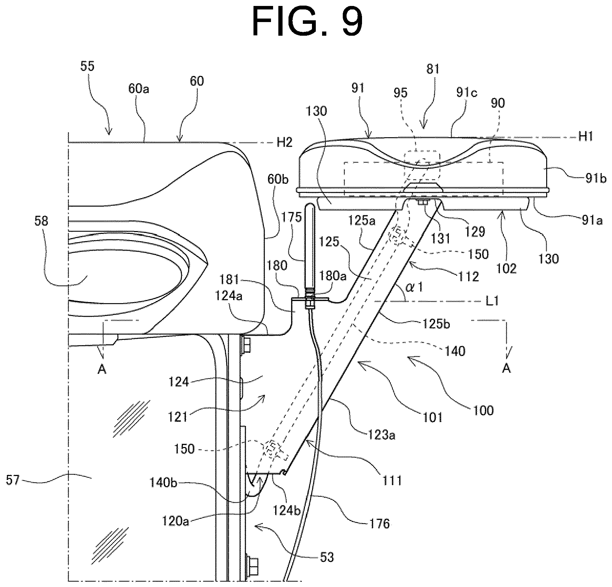

As illustrated in FIG. 9, according to this embodiment, a height position of an upper end of the case 91, that is, a height position H1 of a horizontal surface portion on a center side of the upper surface portion 91c, in the receiving device 81 is substantially the same as a height position H2 of the upper surface portion 60a of the roof panel 60. Specifically, the receiving device 81 is disposed so that the height position H1 is slightly higher than the height position H2 of the roof panel 60. Note that the height position H2 is the height position of the upper end of the roof panel 60.

Furthermore, as for the arrangement of the receiving device 81 in the up-down direction, the receiving device 81 is disposed such that the device main body 90 is positioned lower than the height position H2 of the roof panel 60. That is, the receiving device 81 is disposed such that the entire device main body 90 is positioned lower than the height position H2 so that the device main body 90 does not project from the height position H2 of the roof panel 60.

The receiving device 81 is disposed in the right-left direction such that a right end portion of the side surface portion 91b of the case 91 is positioned close to the left side surface portion 60b of the roof panel 60. The receiving device 81 is disposed in a position having a gap, which is sufficiently smaller than a size D2 of the case 91 in the right-left direction (refer to FIG. 6), with respect to the left side surface portion 60b of the roof panel 60.

A support configuration of the receiving device 81 will now be described. The receiving device 81 is disposed in a state of being supported by a support bracket 100, which is a support member, with respect to the left side wall portion 53 of the cabin 16. The support bracket 100 supports the case 91 of the receiving device 81 so as to consequently support the receiving device 81. Thus the combine harvester 1 includes the support bracket 100, which supports the case 91, with respect to the left side wall portion 53 serving as a side wall portion on the left side of the cabin 16.

The support bracket 100 is disposed in a state of being attached to the upper rear side plate 68 that forms an upper rear portion of the left side wall portion 53 of the cabin 16. The support bracket 100 includes a bracket main body portion 101 which is fixed to the upper rear side plate 68 and forms a major part of the support bracket 100, and an attaching plate portion 102 which is disposed on the bracket main body portion 101 and to which the case 91 of the receiving device 81 is mounted.

The bracket main body portion 101 is a stay portion of a predetermined arm shape in a front view. The bracket main body portion 101 includes a base portion 111 having a mounting portion of the bracket main body portion 101 to the upper rear side plate 68 and an arm portion 112 extending in a predetermined direction from the base portion 111.

The support bracket 100 extends obliquely upward from the upper rear side plate 68 of the left side wall portion 53 in a front view of the machine body. As illustrated in FIG. 9, in the support bracket 100, the arm portion 112 extends from the base portion 111 in the bracket main body portion 101 obliquely upward in a direction separated from the left side wall portion 53 in a plan view. That is, the arm portion 112 linearly projects in an obliquely left direction from the base portion 111. Hereinafter, a direction in which the arm portion 112 extends from the base portion 111, that is, an extending direction of the arm portion 112 is referred to as an "arm portion extending direction".

As illustrated in FIG. 9, in this embodiment, an angle (raising angle) α1 between the arm portion extending direction and the horizontal direction L1 in a front view is approximately 60 degrees. The angle α1 is set in a range from 45 degrees to 80 degrees, for example. Note that a value of the angle α1 is not particularly limited.

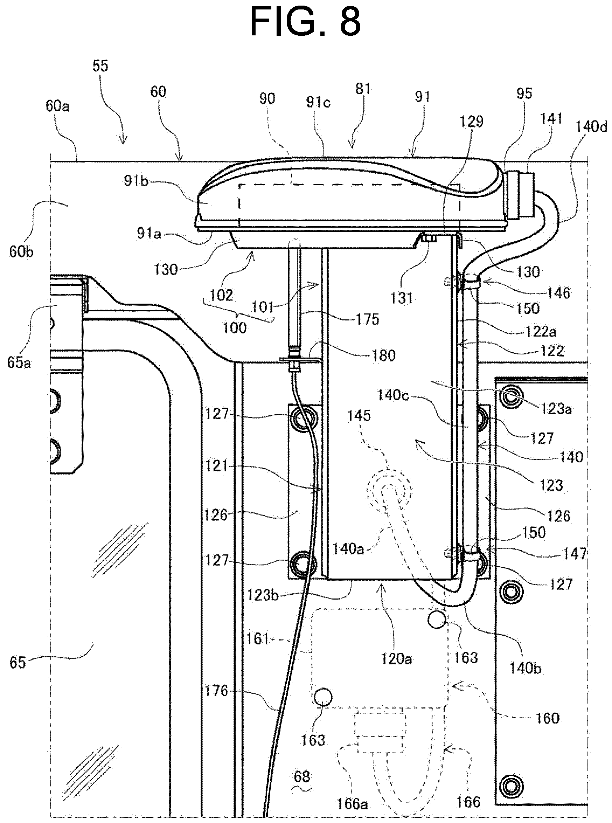

The bracket main body portion 101 is configured by a member formed such that a plate like member is bent in a predetermined shape in a substantially symmetry manner in the front-rear direction (right-left direction in FIG. 8). The bracket main body portion 101 has a front surface portion 121 and a rear surface portion 122 which are arranged in parallel to each other, and an outer surface portion 123 which connects the front surface portion 121 and the rear surface portion 122 to each other.

The front surface portion 121 and the rear surface portion 122 have plate thicknesses in the front-rear direction so as to form straight lines in the right-left direction in a plan view, have the same shape, and overlap with each other in a front view (rear view). Each of the front surface portion 121 and the rear surface portion 122 has a base portion forming portion 124 which forms the base portion 111 and an arm portion forming portion 125 which forms the arm portion 112.

The base portion forming portion 124 serves as a horizontal upper side portion 124a and a horizontal lower side portion 124b which are arranged in parallel to each other, and is comparatively wide in the up-down direction as a longitudinal direction. The arm portion forming portion 125 serves as an inner oblique side portion 125a and an outer oblique side portion 125b which extend in the arm portion extending direction in parallel to each other, and is comparatively narrow portion extending in the arm portion extending direction. The outer oblique side portion 125b extends in the entire up-down direction of the bracket main body portion 101. That is, the outer oblique side portion 125b extends from the arm portion 112 toward the base portion 111, and forms an obtuse-angled corner portion together with the lower side portion 124b of the base portion forming portion 124. Note that, in the rear surface portion 122, the inner oblique side portion 125a is connected to the upper side portion 124a of the base portion forming portion 124 via a curved side portion.

The outer surface portion 123 extends in the arm portion extending direction and has a plate thickness in a direction orthogonal to the arm portion extending direction in a front view. The outer surface portion 123 is positioned between the outer oblique side portions 125b of the front surface portion 121 and the rear surface portion 122, and the outer surface 123a is aligned with the outer oblique side portions 125b in a front view.

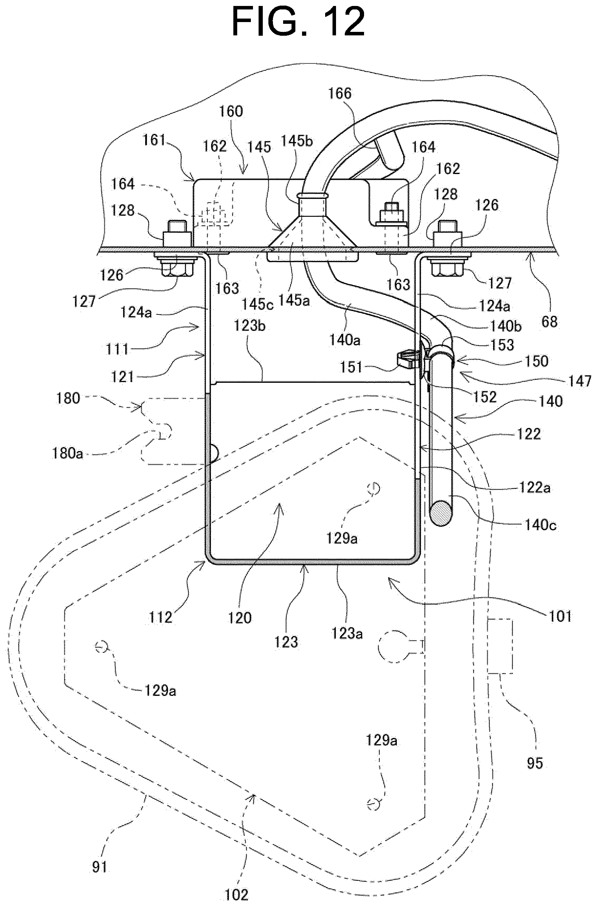

As illustrated in FIG. 12, the bracket main body portion 101 is bent in a substantially U shape formed by the front surface portion 121, the rear surface portion 122, and the outer surface portion 123 with an inner side (right side) in the right-left direction opened in a cross sectional plan view. Furthermore, the bracket main body portion 101 forms a space portion 120 with an upper side opened by the front surface portion 121, the rear surface portion 122, and the outer surface portion 123, together with the upper rear side plate 68. The space portion 120 communicates with an outside at a lower side thereof via a lower opening portion 120a. The lower opening portion 120a is a rectangular opening portion formed by the lower side portions 124b of the front surface portion 121 and the rear surface portion 122, a lower end side portion 123b of the outer surface portion 123, and the upper rear side plate 68. Note that FIG. 12 is a cross sectional plan view taken along a line A to A in FIG. 9.

In this embodiment, in the bracket main body portion 101, the base portion 111 and the arm portion 112 have substantially the same size in the up-down direction. That is, in the up-down direction, a size between the upper side portion 124a and the lower side portion 124b of the base portion 111 and a size between the upper side portion 124a and an upper end of the arm portion forming portion 125 are substantially the same as each other. However, the size relationship between the sizes of the base portion 111 and the arm portion 112 in the up-down direction is not particularly limited.

The bracket main body portion 101 includes front and rear fixing surface portions 126 as fixing portions to the upper rear side plate 68. The front and rear fixing surface portions 126 are formed by bending the front surface portion 121 and the rear surface portion 122 at a right angle toward the front and rear outer sides, respectively, in a range from right end portions of the base portion forming portion 124 to the entire base portion forming portion 124 in the up-down direction. The fixing surface portions 126 are formed in a narrow rectangular shape extending in the up-down direction as a longitudinal direction. The bracket main body portion 101 has a substantially hut shape, in a cross sectional plan view, formed by the front surface portion 121, the rear surface portion 122, and the outer surface portion 123 with the right and left fixing surface portions 126 in the base portion 111 (refer to FIG. 12).

The bracket main body portion 101 is fixed to the upper rear side plate 68 by bolts 127 at four positions, that is, two upper positions and two lower positions in the front and rear fixing surface portions 126, in a state in which the front and rear fixing surface portions 126 overlap with the upper rear side plate 68 from the left. The bolts 127 penetrate the fixing surface portions 126 and the upper rear side plate 68 from the left and are inserted by screwing into corresponding nut portions 128 disposed inside (on the right side of) the upper rear side plate 68 (refer to FIG. 12).

The attaching plate portion 102 includes a support surface portion 129 which is a main body portion forming a horizontal support surface which supports the receiving device 81 and on which the receiving device 81 is mounted at an upper end portion of the support bracket 100. The attaching plate portion 102 is disposed by fixing, by welding or the like, a plate shaped member forming the attaching plate portion 102 to the upper end side of a member forming the bracket main body portion 101.

The attaching plate portion 102 has a substantially triangle shape having a vertex portion beveled so as to correspond to an outer shape of the case 91 in a plan view (refer to FIG. 12). The attaching plate portion 102 forms a surface portion that protrudes to the front side and both the left and right sides with respect to the upper end of the arm portion 112. The attaching plate portion 102 has an outer size slightly smaller than that of the bottom surface portion 91a of the case 91, is disposed along the outer shape of the case 91 in a plan view with respect to the case 91, and is positioned within a range of the outer shape of the case 91 in a plan view. The attaching plate portion 102 has bent portions 130 extending along side portions of the triangular outer shape with respect to the support surface portion 129. The bent portions 130 are formed to be bent downward so as to form a right angle with respect to the support surface portion 129 of the attaching plate portion 102.

The attaching plate portion 102 fixedly supports the receiving device 81 by fixing the case 91 at a plurality of portions by bolts 131 in a state in which the receiving device 81 is mounted on and supported by the support surface portion 129. The case 91 is fixed to the attaching plate portion 102 by the plurality of bolts 131 in a state in which the bottom surface portion 91a overlaps with the support surface portion 129 from above. Fixing portions fixed by the bolts 131 are provided in three portions in the vicinity of the vertices of a substantially triangular shape of the attaching plate portion 102. Hole portions 129a that allow the bolts 131 to penetrate are formed in three portions on the support surface portion 129 of the attaching plate portion 102 (refer to FIG. 12). The bolts 131 penetrate the hole portions 129a and are inserted by screwing into predetermined screw holes formed in the case 91.

As described above, the support bracket 100 has the attaching plate portion 102 on an upper side of the bracket main body portion 101 fixed to the upper rear side plate 68 of the cabin 16, and supports the receiving device 81 which is mounted and fixed on the attaching plate portion 102. Thus the receiving device 81 is disposed in the left side wall portion 53 of the cabin 16 in a state of being supported by the support bracket 100 which is fixed to the upper rear side plate 68.

The receiving device 81 accepts connections of a power supply line which is a line for power supply and a cable 140 including a signal line which is a line for signal transmission/reception. In the receiving device 81, a connector portion 95 that accepts a connection of the cable 140 is provided at a central portion in the right-left direction of a rear portion of the side surface portion 91b of the case 91. The connector portion 95 is disposed as a projecting portion projected rearward from a rear surface portion of the case 91.

The connector portion 95 accepts coupling of the connector 141 on a cable side disposed in an edge portion of the cable 140. Since the cable side connector 141 is coupled to the connector portion 95 of the receiving device 81, the cable 140 is connected to the device main body 90 of the receiving device 81. Note that the cable 140 includes at least one of a power supply line and a signal transmission/reception line.

One end of the cable 140 that extends from the inside of the cabin 16, penetrates the upper rear side plate 68, projects outside the cabin 16, and has the cable side connector 141 disposed thereon is connected to the receiving device 81. The other end of the cable 140 is wired in a predetermined path in the cabin 16, and is connected to the controller 200 (refer to FIG. 7) or the like included in the combine harvester 1.

As illustrated in FIG. 12, a grommet 145 which forms a guide hole portion accepting insertion of the cable 140 is disposed on the upper rear side plate 68. The grommet 145 is a rubber member having a funnel-like outer shape. The grommet 145 includes a conical portion 145a having a conical outer shape and an insertion portion 145b which is a tubular portion extending from a small diameter side of the conical portion 145a, and forms a hole portion having a shape along outer shapes of the conical portion 145a and the insertion portion 145b.

The grommet 145 has an outer circumferential groove 145c in a portion in the vicinity of an opening end portion on a large diameter side, and is attached to the upper rear side plate 68 in a state in which an opening edge portion of a circle opening of the upper rear side plate 68 is fitted with the outer circumferential groove 145c. A portion of the grommet 145 from the outer circumferential groove 145c to a small diameter side (insertion portion 145b side) is positioned on an inner side of the upper rear side plate 68 (interior side of the cabin 16).

The grommet 145 is disposed in a portion covered by a lower portion of the outer surface portion 123 of the support bracket 100 in the upper rear side plate 68 in a left side view (refer to FIG. 8). Specifically, the grommet 145 is disposed, in the upper rear side plate 68, a portion within a height range of the base portion 111 and in a center position between the front surface portion 121 and the rear surface portion 122 in the front-rear direction, as the positional relationship with respect to the support bracket 100. Therefore, the grommet 145 has the opening portion on the large diameter side opened toward the space portion 120.

The cable 140 is wired along the support bracket 100. The cable 140 is wired as follows with respect to the support bracket 100 and the receiving device 81 supported by the support bracket 100.

The cable 140 that extends from an inside of the cabin 16, penetrates the upper rear side plate 68 through the grommet 145, and projects to the space portion 120 is disposed toward a lower rear side in the space portion 120 and extends out of the space portion 120 downward from the lower opening portion 120a. The cable 140 extending from the lower opening portion 120a to the outside of the space portion 120 passes below the lower side portion 124b of the rear surface portion 122 of the bracket main body portion 101, goes around the rear side of the rear surface portion 122, and is folded upward.

The cable 140 folded upward is disposed upward along the rear surface 122a which is a plate surface on the rear side of the rear surface portion 122, and is disposed along a portion projecting rearward from the rear surface portion 122 of the rear end portion of the case 91 in the side view, so as to be connected to the receiving device 81. That is, the cable 140 bends rearward and obliquely upward at a portion in the vicinity of an upper end portion of the rear surface portion 122 so as to be spaced away from the rear surface portion 122, and turns around toward the front side, so that the cable side connector 141 at the tip end portion is coupled to the connector portion 95 of the receiving device 81 from the rear side.

As described above, the cable 140 wired on the support bracket 100 and the receiving device 81 has the following portion as a wiring mode of a wiring portion extending outward of the cabin 16 from the upper rear side plate 68 and connected to the receiving device 81. That is, the cable 140 has an in-bracket wire portion 140a extending from the grommet 145 and positioned in the space portion 120, a lower folded wire portion 140b folded downward from the lower opening portion 120a of the space portion 120, a linear wire portion 140c disposed along the rear surface portion 122 on the rear side of the rear surface portion 122, and an upper folded wire portion 140d spaced rearward from the rear surface portion 122 and connected to the receiving device 81.

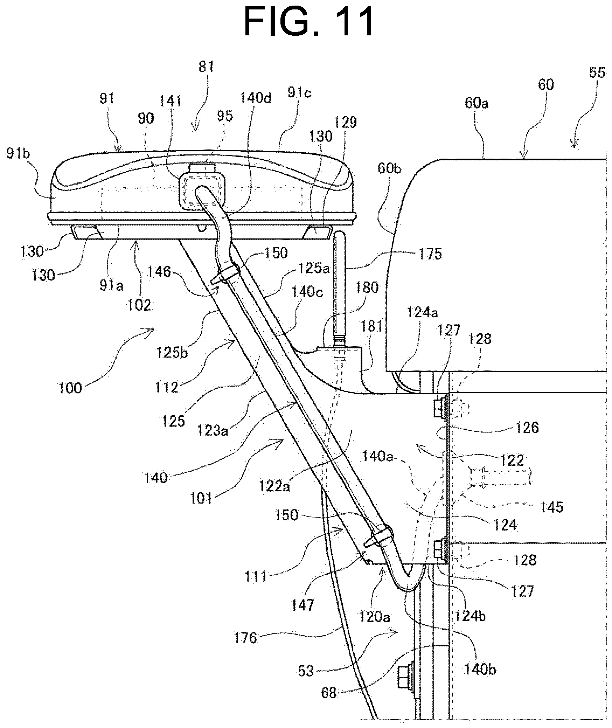

In the cable 140, the linear wire portion 140c disposed along the rear surface 122a of the rear surface portion 122 serves as a portion wired along the support bracket 100. The linear wire portion 140c is linearly arranged along the arm portion extending direction from the lower end portion to the upper end portion of the support bracket 100 (refer to FIG. 11). The linear wire portion 140c is arranged such that an upper portion thereof is positioned within the range of the arm portion forming portion 125 of the rear surface portion 122.

The upper end portion and the lower end portion of the linear wire portion 140c in the cable 140 are locked and supported by locking tools 150 which are cable locking members on the rear surface portion 122. A cable support portion 146 formed by the upper locking tool 150 is positioned in the vicinity of the upper end portion of the arm portion forming portion 125 of the rear surface portion 122. A cable support portion 147 formed by the lower locking tool 150 is positioned in the vicinity of a corner portion at an obtuse angle formed between the lower side portion 124b and an outer oblique side portion 125b of the rear surface portion 122.

The locking tools 150 are resin or metallic members and are held in a state of being attached to the rear surface portion 122 and allowing the cable 140 to penetrate. Each of the locking tools 150 includes a locking shaft portion 151 which penetrates the rear surface portion 122, a guard portion 152 which is disposed on one side of the locking shaft portion 151 in the axial direction, and a cable holding portion 153 which is disposed on an opposite side to the locking shaft portion 151 with respect to the guard portion 152 (refer to FIG. 12). The guard portion 152 is a flat conical surface portion having a substantially disc shape perpendicular to the axial direction of the locking shaft portion 151, and a diameter increasing side is on the locking shaft portion 151 side.

Each of the locking tools 150 is locked and fixed on the rear surface portion 122 in a state in which the locking shaft portion 151 penetrates a hole portion formed in the rear surface portion 122. The locking tool 150 forms a clip portion which performs a locking action with respect to the rear surface portion 122 by the locking shaft portion 151 and the guard portion 152. The locking tool 150 is locked and fixed on the rear surface portion 122 in a state in which the guard portion 152 is in contact with the rear surface 122a of the rear surface portion 122.

The locking shaft portion 151 has a center shaft portion and a plurality of locking piece portions (a pair of locking piece portions in this embodiment) disposed around a center shaft portion as portions connected to the center shaft portion, and has an outer shape which is partially larger than a hole diameter of the hole portion of the rear surface portion 122. The locking shaft portion 151 penetrates the hole portion of the rear surface portion 122 by temporarily deforming the plurality of locking piece portions in an elastic manner, sandwich the rear surface portion 122 with the guard portion 152 while an anti-slip-out action for the hole portion of the rear surface portion 122 is achieved by the locking piece portions in a nature state, so that the locking tool 150 is locked and fixed on the rear surface portion 122.

The cable holding portion 153 includes a band portion for holding the cable 140 and forms a ring-like portion by the band portion so as to holds the cable 140 in a state in which the cable 140 penetrates the cable holding portion 153. The band portion extends from the main body portion of the locking tool 150, surrounds a held portion of the cable 140, and is held in a state where a distal end thereof is inserted into a predetermined locking hole portion in the locking tool 150.

In this way, in the cable 140, a portion locked and supported on the rear surface portion 122 by the locking tools 150 at the upper and lower cable support portions 146 and 147 serves as the linear wire portion 140c. The linear wire portion 140c of the cable 140 is disposed in parallel to the rear surface 122a in a state of being slightly spaced away from the rear surface 122a of the rear surface portion 122.

The positioning system 80 includes a converter 160 disposed for the receiving device 81 (refer to FIG. 7). The converter 160 is a DC/DC converter which controls a voltage of DC power and converts DC power into DC power, and has a function of performing conversion, stabilization, etc. of the voltage.

As illustrated in FIGS. 8 and 12, the converter 160 includes a casing 161 having an outer shape of a substantially cuboid shape, and is disposed on an opposite side of a side in which the support bracket 100 is disposed with respect to the upper rear side plate 68 of the cabin 16, that is, disposed in an inside (right side) of the upper rear side plate 68. The converter 160 is disposed immediately below the support bracket 100 in the up-down direction (refer to FIG. 8).

The converter 160 is fastened and fixed on the upper rear side plate 68 by bolts 163 and nuts 164 at fixing portions 162 of a plate shape formed by cutting off a pair of corners diagonally positioned in a plan view in the casing 161. The bolts 163 penetrate the upper rear side plate 68 and the respective fixing portions 162 from the left side of the upper rear side plate 68 and screwed by the respective nuts 164 on the right side of the respective fixing portions 162.

The converter 160 is electrically connected to the receiving device 81 so as to control electric power supplied from a power source to the receiving device 81. The converter 160 receives DC power supplied from the power source, such as an auxiliary battery included in the combine harvester 1, and steps up a voltage of the DC power to thereby generate a high voltage. The DC power converted by the converter 160 is supplied to the receiving device 81.

The converter 160 includes a connector having a plurality of terminals for input and output on a lower side surface portion of the casing 161. A connector 166a disposed at one end of a cable 166 for the converter 160 is coupled to the connector (refer to FIG. 8). The other end of the cable 166 merges with the cable 140 inside the upper rear side plate 68 (refer to FIG. 12).

As described above, with the configuration in which the positioning system 80 includes the converter 160 for the receiving device 81, a sufficient voltage is obtained by electric power supplied to the receiving device 81 by the voltage rising action or the like of the converter 160, and in addition, the voltage may be stabled, so that an excellent operation state of the positioning system 80 can be ensured. Furthermore, the converter 160 is disposed inside the upper rear side plate 68 on which the support bracket 100 supporting the receiving device 81 is disposed thereon in a state being attached to the upper rear side plate 68. According to this configuration, the inside space of the upper rear side plate 68 can be effectively used, and in addition, the converter 160 can be disposed near the receiving device 81, and therefore, the cable 166 may be shortened.

As illustrated in FIG. 7, the positioning system 80 includes a correction information terminal 170 as a correction information device and an antenna 175 that receives information from the base station 300 located outside the work site. The correction information terminal 170 is a device that receives, from the base station 300 serving as a standard station positioned outside the field, positioning correction information which is correction information for correcting positional information (positioning information) received by the receiving device 81.

The antenna 175 is used when the correction information terminal 170 receives information from the base station 300, and is connected to the correction information terminal 170 through an antenna cable 176. The correction information terminal 170 is installed in a predetermined position in the cabin 16.

The combine harvester 1 functions as a mobile station based on the relationship with the base station 300 and constitutes a communication system with the base station 300. The combine harvester 1 receives positioning correction information hour to hour from the base station 300, corrects the positional information received by the receiving device 81 based on the received positioning correction information, and obtains its positioning information with high accuracy.

The base station 300 is a fixed base station installed in a predetermined reference position outside the field. The base station 300 is, for example, a base station originally installed by a telecommunication carrier or a base station installed by a municipality or the like. The base station 300 calculates, at predetermined time intervals, a difference between its own positioning information calculated based on GNSS satellite signals received from, for example, a plurality of GNSS satellites (positioning satellites) and its own positional information recognized in advance, and transmits information on the difference as positioning correction information. The base station 300 includes an antenna for receiving a satellite signal for calculating its own positioning information, and a wireless communication device for transmitting and receiving various signals to and from the antenna 175 of the combine harvester 1.

The base station 300 consecutively generates positioning correction information at a preset cycle, for example, and transmits a signal including the generated positioning correction information to the correction information terminal 170 of the combine harvester 1 using the wireless communication device. The correction information terminal 170 processes the signal including the positioning correction information received by the antenna 175 so as to acquire the positioning correction information. The positioning correction information acquired by the correction information terminal 170 is used for correcting the positioning information acquired by the receiving device 81.

In the combine harvester 1, the controller 200 corrects the positioning information acquired by the receiving device 81 using the positioning correction information transmitted from the base station 300 so as to calculate and acquire current positional information of the combine harvester 1. The controller 200 acquires latitude information and longitude information, for example, as the current positional information of the traveling machine body 2 of the combine harvester 1. In this way, since the correction information terminal 170 corrects the positioning information using the positioning correction information supplied from the base station 300, a position of the traveling machine body 2 may be acquired with high accuracy. The positioning information corrected by the positioning correction information is used for the autonomous traveling of the combine harvester 1.

The antenna 175 is an external antenna disposed outside the cabin 16 in a state being attached to the support bracket 100. The antenna 175 is a linear rod-shaped member, and is provided in a state of being erected with an extending direction along the up-down direction.

The antenna 175 is disposed on a front side with respect to the support bracket 100 in a state being supported by an antenna support surface portion 180 disposed as a portion of the support bracket 100. The antenna support surface portion 180 has a horizontal plate shape with the up-down direction as a plate thickness direction, and formed by orthogonally bending forward an upper end portion of a projecting piece portion 181 which is a portion of the front surface portion 121. The projecting piece portion 181 is formed between the upper side portion 124a of the base portion forming portion 124 and the inner oblique side portion 125a of the arm portion forming portion 125 in the front surface portion 121 so as to form a right-angled corner portion by a right side portion along the up-down direction and an upper side portion along the right-left direction in a front view. The antenna support surface portion 180 is formed along the upper side portion of the projecting piece portion 181 in a front view.

The antenna support surface portion 180 has a substantially rectangular outer shape in a plan view. A support recessed portion 180a formed by cutting-off with a front side opened is formed in a front portion of the antenna support surface portion 180 (refer to FIG. 12). The antenna support surface portion 180 serves as a mounting seat for the antenna 175, and supports the antenna 175 in an upright state in a state in which a lower end portion of the antenna 175 is fitted to the support recessed portion 180a. The antenna 175 is fixed to the antenna support surface portion 180, for example, in a state in which the antenna support surface portion 180 is vertically sandwiched between a flange-shaped locking portion disposed at a lower end portion of the antenna 175 and a nut portion screwed to a screw portion formed below the locking portion.

In this way, the antenna 175 is disposed in the upright state while the lower end portion is supported by the antenna support surface portion 180 formed on the support bracket 100. An antenna cable 176 extends from a lower end of the antenna 175 located below the antenna support surface portion 180. Note that the fixing configuration of the antenna 175 with respect to the antenna support surface portion 180 is not particularly limited.

Although a height of the antenna 175 is not limited, in this embodiment, a tip end (upper end) of the antenna 175 is positioned in the substantially the same height as the attaching plate portion 102 of the support bracket 100. A substantially entire portion of the antenna 175 is positioned in a space portion surrounded by the bracket main body portion 101, the bottom surface portion 91a of the case 91, and the side surface portion 60b of the roof panel 60 in a front view.

According to the combine harvester 1 of this embodiment having the configuration described above, with the configuration including the cabin 16 covering the driving section 15, the space surrounding the cabin 16 can be utilized, and in addition, the receiving device 81 can be installed in a position close to the swivel center of the vehicle so that positioning accuracy is improved.

In the combine harvester 1, the receiving device 81 is installed on the left side which is near a swivel center T0 (refer to FIG. 3) of the machine body with respect to the cabin 16 in the right-left direction, and in addition, installed in a position on the rear side with respect to the front-rear center position C0 (refer to FIG. 6) which is the center position of the cabin 16 in the front-rear direction. Furthermore, the receiving device 81 is attached to the cabin 16 through the support bracket 100. Here, the swivel center T0 is a position over the machine body center O1 which is a tread center of the right and left crawler portions 5, and is a center position of the right and left crawler portions 5 in the front-rear direction.

With this configuration, the receiving device 81 may be disposed in a position close to the swivel center T0 using a space around the cabin 16, that is, a left space of the roof portion 55. Accordingly, an error is reduced when the receiving device 81 acquires positional information of the combine harvester 1, and therefore, positioning accuracy can be improved.

Furthermore, the space 59 is formed between the grain discharge conveyor 13 in a retracted state and the cabin 16 on the left side of the roof portion 55 of the cabin 16, and the receiving device 81 is disposed in the space 59. When an ejection operation is performed by the grain discharge conveyor 13, the grain discharge conveyor 13 is turned from the retracted state of being supported by the auger rest 27 to the left side of the machine body or upward with the base portion positioned on a right rear of the machine body as a turning fulcrum. In this way, the receiving device 81 is disposed in the space 59 formed between the cabin 16 and the grain discharge conveyor 13 in the retracted state. With the arrangement configuration of the receiving device 81, interference of the receiving device 81 with the grain discharge conveyor 13 can be suppressed.

Furthermore, the receiving device 81 is disposed along an upper edge portion 55a of the roof portion 55 of the cabin 16 when viewed from the left side of the machine body. With this configuration, the receiving device 81 may be disposed in a position substantially the same height as the roof portion 55 of the cabin 16 which is a high position in the combine harvester 1, and therefore, an upper portion of the receiving device 81 has an empty space. Accordingly, since interference of a reception range of the receiving device 81 with the roof portion 55 can be suppressed and excellent receiving property is attained in the receiving device 81, an error is reduced when the receiving device 81 acquires positional information of the combine harvester 1, and therefore, positioning accuracy can be improved.

Furthermore, the receiving device 81 does not overlap with the roof portion 55 of the cabin 16 in a plan view. Furthermore, according to the arrangement configuration of the receiving device 81, the receiving device 81 may be disposed so as not to project upward from the roof portion 55 in a position of the inside (left side) in the right-left direction of the cabin 16. This makes it possible to prevent the receiving device 81 from disturbing operation of the combine harvester 1, conveyance of the combine harvester 1, or the like.

Furthermore, the receiving device 81 includes the device main body 90 and the case 91 accommodating the device main body 90, and the combine harvester 1 includes the support bracket 100 which is attached to the left side wall portion 53 of the cabin 16 and which supports the case 91. That is, the receiving device 81 is disposed through the support bracket 100 on the left side wall portion 53 of the cabin 16. With this configuration, the receiving device 81 can be firmly supported by the cabin 16 by utilizing the left space of the cabin 16.

In particular, in this embodiment, the support bracket 100 is disposed on the upper rear side plate 68 of the left side wall portion 53 of the cabin 16. With this configuration, the support bracket 100 can be disposed without interfering the upper left window portion 64 or the lower left window portion 66 which is provided on the left side wall portion 53. Thus, the support bracket 100 does not obstruct the field of view of the driver through the upper left window portion 64 and the lower left window portion 66, for example, at a time of the reaping work by the reaping section 3 or the like, so that good workability can be secured.

Furthermore, the support bracket 100 extends obliquely upward (left obliquely upward) with respect to the vertical direction in a front view from the left side wall portion 53 of the cabin 16. According to this configuration, a space is ensured which is below the receiving device 81 and which is on the left side of the support bracket 100 when compared with a configuration in which the arm portion 112 vertically extends in the up-down direction from the attaching plate portion 102. That is, with the configuration in which the support bracket 100 extends left obliquely upward by the arm portion 112, the space on the left side of the support bracket 100 may be enlarged below the receiving device 81 (refer to a portion indicated by a dotted line oval S 1 in FIG. 5). Consequently, the space below the receiving device 81 may be used as a work space, and excellent workability can be attained in a maintenance operation for the receiving device 81 and the converter 160.

Furthermore, the combine harvester 1 includes the antenna 175 that receives information supplied from the base station 300, and the antenna 175 is attached to the support bracket 100. With this configuration, since the antenna 175 can receive positioning correction information supplied from the base station 300, positional information received by the receiving device 81 can be corrected and positioning accuracy can be improved.

Furthermore, according to the configuration in which the antenna 175 is attached to the support bracket 100, a member to be used for installing the antenna 175 is not required to be additionally disposed near the cabin 16, and accordingly, the antenna 175 can be arranged without increasing the number of members disposed near the cabin 16. Accordingly, the space surrounding the cabin 16 can be effectively used.

Furthermore, the cable 140 connected to the receiving device 81 is wired along the support bracket 100. With this configuration, since the support bracket 100 may be used as a portion for holding the cable 140 outside the cabin 16, a member for holding the cable 140 extending outside from the inside of the cabin 16 is not required to be separately disposed. By this, the cable 140 can be accommodated with a simple configuration in the outside of the cabin 16 without increasing the number of components disposed near the cabin 16, and accordingly, the space around the cabin 16 may be effectively used.

In particular, according to this embodiment, the support bracket 100 is configured to form the space portion 120 with the upper rear side plate 68, and the cable 140 connected to the receiving device 81 projects so as to face the inside of the space portion 120 after penetrating the upper rear side plate 68 from the inside of the cabin 16. Then the cable 140 goes around the rear side of the support bracket 100 from the lower side of the space portion 120 and is disposed along the rear surface portion 122 in the state of being locked and fixed at the upper and lower two portions by the locking tools 150 with respect to the rear surface portion 122, to be connected to the receiving device 81. With this configuration, the portion, in the cable 140, extending outside the cabin 16 may be disposed inside the support bracket 100 or on the rear side of the support bracket 100, and therefore, the cable 140 can be protected by the support bracket 100.

The above-described embodiment is one example of the present invention, and the present invention is not limited to the above-described embodiment. Therefore, it is needless to say that various modifications can be made even to those other than the above-described embodiment according to the design and the like within the scope that does not depart from the technical idea of the present invention. The effects described in the present disclosure are merely illustrative and are not limited, and other effects may also be exerted.

Although the combine harvester 1 includes the positioning system 80 that receives electric waves from a positioning satellite in the foregoing embodiment, as a configuration for position measurement, a device using a quantum compass for performing position measurement by measuring earth magnetism or the like without using electric waves transmitted from a positioning satellite may be employed in addition to or instead of the positioning system 80 utilizing the technique of satellite positioning.

The present technique may have the following configurations. The configurations described below can be selected, omitted, and arbitrary combined.
(1) A work vehicle, comprising:
   a cabin covering a driving section; and
   a position measuring device for measuring a position in a work site based on positional information, wherein
   the position measuring device is installed in a position on a rear side of a center position in a front-rear direction of a machine body with respect to the cabin.
(2) The work vehicle according to (1), wherein
   the position measuring device is disposed along an upper edge portion of a roof portion of the cabin in a side view of the machine body.
(3) The work vehicle according to (1) or (2), wherein
   the position measuring device includes a device main body, a case accommodating the device main body, and a support bracket which supports the case with respect to a side wall portion of the cabin.
(4) The work vehicle according to (3), wherein
   the support bracket extends obliquely upward from the side wall portion in a front view of the machine body.
(5) The work vehicle according to (3) or (4), further comprising:
   an antenna which receives information from a base station located outside the work site, wherein
   the antenna is attached to the support bracket.
(6) The work vehicle according to any one of (3) to (5), wherein
   the position measuring device allows connection of a cable including at least one of a power supply line and a signal transmission/reception line, and
   the cable is wired along the support bracket.
(7) The work vehicle according to any one of (1) to (6), further comprising:
   a grain discharge device that is disposed in a turnable manner and in a retraction available manner in a predetermined turning position and that discharges grains to an outside the machine, wherein
   the position measuring device is disposed in a space formed between the cabin and the grain discharge device in the retracted state.
(8) The work vehicle according to any one of (1) to (7), wherein
   the position measuring device is disposed on a left side wall portion of the cabin.
(9) The work vehicle according to any one of (1) to (8), wherein the position measuring device does not overlap with the roof portion of the cabin in a plan view.

### REFERENCE SIGNS LIST

1 Combine harvester (work vehicle)
13 Grain discharge conveyor (grain discharge device)
15 Driving section
16 Cabin
53 Left side wall portion (side wall portion)
55 Roof portion
55a Upper edge portion
59 Space
80 Positioning system
81 Receiving device (position measuring device)
90 Device main body
91 Case
100 Support bracket
101 Bracket main body portion
102 Attaching plate portion
111 Base portion
112 Arm portion
140 Cable
175 Antenna
180 Antenna support surface portion
300 Base station

## Claims

1. A work vehicle, comprising:
a cabin covering a driving section; and
a position measuring device for measuring a position in a work site based on positional information, wherein
the position measuring device is installed in a position on a rear side of a center position in a front-rear direction of a machine body with respect to the cabin.

2. The work vehicle according to claim 1, wherein
the position measuring device is disposed along an upper edge portion of a roof portion of the cabin in a side view of the machine body.

3. The work vehicle according to claim 1 or claim 2, wherein
the position measuring device includes a device main body, a case accommodating the device main body, and a support bracket which supports the case with respect to a side wall portion of the cabin.

4. The work vehicle according to claim 3, wherein
the support bracket extends obliquely upward from the side wall portion in a front view of the machine body.

5. The work vehicle according to claim 3, further comprising:
an antenna which receives information from a base station located outside the work site, wherein
the antenna is attached to the support bracket.

6. The work vehicle according to claim 3, wherein
the position measuring device allows connection of a cable including at least one of a power supply line and a signal transmission/reception line, and
the cable is wired along the support bracket.

7. The work vehicle according to claim 3, further comprising:
a grain discharge device that is disposed in a turnable manner and in a retraction available manner in a predetermined turning position and that discharges grains to an outside the machine, wherein
the position measuring device is disposed in a space formed between the cabin and the grain discharge device in the retracted state.

8. The work vehicle according to claim 3, wherein
the position measuring device is disposed on a left side wall portion of the cabin.

9. The work vehicle according to claim 3, wherein
the position measuring device does not overlap with the roof portion of the cabin in a plan view.
